# EUROPEAN PATENT APPLICATION

(11) **EP 4 160 035 A1**
(43) Date of publication of application: **05.04.2023**
(21) Application number: 22198802.5
(22) Date of filing: 29.09.2022
(51) Int. Cl.: F16D 1/10

(54) **MOTIVE POWER TRANSMISSION APPARATUS AND METHOD FOR ASSEMBLING SAME**

(30) Priority: 30.09.2021 CN 202111159467
(71) Applicant: Siemens Automotive ePowertrain Systems (Shanghai) Co. Ltd., Shanghai 201108 (CN)
(72) Inventor: LIU, Jinjin, Shanghai, 201108 (CN)
(74) Representative: Valeo Powertrain Systems

(57) **Abstract**

The present disclosure proposes a motive power transmission apparatus (10), comprising: a first shaft (100), extending along a central axis and comprising a hollow cavity (130), with a first spline part (110) provided on an inner peripheral wall of the hollow cavity; a second shaft (200), extending along the central axis and comprising a second spline part (210) provided on an outer peripheral wall of the second shaft, the second spline part being engaged with the first spline part to enable the second shaft to rotate together with the first shaft; wherein the motive power transmission apparatus (10) further comprises a sealing cap (300), the sealing cap comprising a base part (310) and a circumferential part (320) extending around the base part, and the sealing cap is configured to be elastically deformable.

## Description

### TECHNICAL FIELD

The present disclosure relates to a motive power transmission apparatus, and a method for assembling such a motive power transmission apparatus.

### BACKGROUND

A pair of shafts with complementary splines, e.g. a hollow shaft with internal splines and a solid shaft with external splines, is generally coupled via the splines in order to transmit motive power, being used in a gearbox for example. When the splines are exposed to damp air, they might rust very easily; this will affect the efficiency of motive power transmission, and may even result in the shafts needing to be replaced. Thus, lubricating grease needs to be applied at the spline coupling part, to ensure that the splines will not rust and thus guarantee the service life of the shafts and even the motive power transmission apparatus, as well as to effectively reduce noise. However, if there is no sealing member at the spline coupling part, the lubricating grease will leak due to high-speed rotation, affecting the lubrication result, and the lubricating grease might also be affected by external dirt.

At present, in response to this problem, one solution in the prior art involves the use of a solid sealing shaft to seal the spline coupling part; however, the solid sealing shaft will increase the weight of the apparatus as a whole, making the apparatus too heavy overall and affecting the efficiency of motive power transmission, and it is thus necessary to reconsider the critical rotation speed and manufacturing feasibility of the apparatus. Other prior art solutions involve the use of a felt or rubber component to seal the hollow shaft, but such a component has a different thermal expansion coefficient from the splined hollow shaft and solid shaft mentioned above; consequently, when heat is generated during operation, such a felt or rubber component will fall off easily, thus causing failure of sealing and affecting the operation of the apparatus, and might cause irreversible damage.

The present disclosure aims to solve the problem in the prior art mentioned above.

### SUMMARY

To this end, according to one aspect of the present disclosure, a motive power transmission apparatus is proposed, comprising: a first shaft, extending along a central axis and comprising a hollow cavity, with a first spline part provided on an inner peripheral wall of the hollow cavity; a second shaft, extending along the central axis and comprising a second spline part provided on an outer peripheral wall of the second shaft, the second spline part being engaged with the first spline part to enable the second shaft to rotate together with the first shaft; wherein the motive power transmission apparatus further comprises a sealing cap, the sealing cap comprising a base part and a circumferential part extending around the base part, and wherein the sealing cap is configured to be elastically deformable, so that the sealing cap is fixed in a sealed manner in the hollow cavity by the circumferential part pressing radially against the inner peripheral wall of the hollow cavity of the first shaft.

Thus, in the motive power transmission apparatus proposed according to the present disclosure, lubricating grease applied at the spline coupling part is sealed by means of the sealing cap positioned in the hollow cavity of the first shaft; the weight of such a sealing cap is negligible compared to the weight of the entire motive power transmission apparatus, so will not affect the motive power transmission parameters and result of the motive power transmission apparatus. Moreover, such a sealing cap is elastically deformable, and thus can be fixed in a sealed manner by the circumferential part thereof pressing radially against the inner peripheral wall of the hollow cavity of the first shaft; thus, even when heat is being given off by the motive power transmission apparatus during operation, the sealing cap will not loosen in the hollow cavity of the first shaft, so sustained and effective sealing is ensured. Furthermore, such a sealing cap is structurally simple and compact in volume, saves material, is easy to process and manufacture, and has high cost-effectiveness.

The motive power transmission apparatus proposed in the present disclosure may comprise one or more of the following further developments.

In some embodiments, the base part of the sealing cap is provided with a boss. The boss is helpful in enabling the sealing cap to deform elastically.

In some embodiments, the boss is a conical frustum centred on the central axis. The conical boss further increases the sealing cap's ability to deform elastically.

In some embodiments, the sealing cap comprises a first sealing washer disposed on an outer side of the circumferential part. The first sealing washer makes it possible to further ensure the sealing result.

In some embodiments, a step portion is provided in the hollow cavity of the first shaft, and the sealing cap is positioned at the step portion. Thus, the finishing required for sealing may be performed on the step portion alone, reducing the processing costs for the first shaft.

In some embodiments, the sealing cap is provided with a gas pressure balancing hole. This can ensure gas pressure balance between the two sides of the sealing cap, to avoid a situation where the sealing cap experiences axial pressure, and ensure the stability of the sealing cap.

In some embodiments, the thermal expansion coefficient of the sealing cap is the same as the thermal expansion coefficient of the first shaft and the second shaft. Thus, even when heated, the sealing cooperative relationship between the sealing cap and the first shaft will not be affected in any way.

In some embodiments, an axial stop for the sealing cap is provided on the inner peripheral wall of the hollow cavity of the first shaft. This makes it easier to ensure axial positioning of the sealing cap.

In some embodiments, the inner peripheral wall of the hollow cavity of the first shaft comprises a first smooth portion, the first smooth portion being located at the opposite side of the first spline part from the sealing cap in the axial direction, the outer peripheral wall of the second shaft comprises a second smooth portion corresponding to the first smooth portion, and a second sealing washer is provided between the first smooth portion and the second smooth portion. This can ensure complete sealing of the spline engagement part.

In some embodiments, the motive power transmission apparatus is an electric drive assembly system comprising an electric machine and a gearbox, the first shaft is an electric machine shaft, and the second shaft is a gearbox input shaft.

Another aspect of the present disclosure relates to a vehicle, comprising the motive power transmission apparatus as described above.

According to another aspect of the present disclosure, a method for assembling a motive power transmission apparatus is proposed, comprising the following steps:
step a: providing a first shaft, the first shaft extending along a central axis, and comprising a hollow cavity, with a first spline part provided on an inner peripheral wall of the hollow cavity;
step b: providing a sealing cap, the sealing cap comprising a base part and a circumferential part extending around the base part, and the base part being provided with a boss;
step c: providing an assembly tool, the assembly tool comprising a clamp and a tool rod;
step d: clamping the boss of the sealing cap with a clamping plate of the clamp at a first open end of the first shaft, inserting the tool rod in a first axial direction through a second open end of the first shaft opposite the first open end, in order to use the tool rod to push the boss of the sealing cap into the clamping plate of the clamp, so that the sealing cap deforms elastically;
step e: moving the sealing cap through the first open end of the first shaft in a second axial direction opposite to the first axial direction, up to an installation position in the hollow cavity;
step f: releasing the assembly tool, so that the sealing cap is fixed in a sealed manner in the hollow cavity by the circumferential part of the sealing cap pressing radially against the inner peripheral wall of the hollow cavity of the first shaft;
step g: providing a second shaft, the second shaft extending along the central axis, and comprising a second spline part provided on an outer peripheral wall of the second shaft;
step h: engaging the second spline part of the second shaft with the first spline part of the first shaft, to enable the second shaft to rotate together with the first shaft.

The method proposed in the present disclosure may comprise one or more of the following further developments.

In some embodiments, releasing the assembly tool in step f comprises withdrawing the tool rod from the sealing cap, and then moving the clamp away from the sealing cap.

In some embodiments, in step b, the boss of the sealing cap provided is configured as a conical frustum centred on the central axis.

In some embodiments, providing the sealing cap in step b further comprises providing a first sealing washer on an outer side of the circumferential part of the sealing cap.

In some embodiments, in step a, the first shaft provided comprises a step portion disposed in the hollow cavity, and the installation position in step e is located at the step portion.

In some embodiments, in step b, the sealing cap provided is provided with a gas pressure balancing hole.

In some embodiments, the thermal expansion coefficient of the sealing cap is the same as the thermal expansion coefficient of the first shaft and the second shaft.

In some embodiments, in step a, an axial stop for the sealing cap is provided on the inner peripheral wall of the hollow cavity of the first shaft provided.

In some embodiments, in step a, the inner peripheral wall of the hollow cavity of the first shaft provided comprises a first smooth portion, the first smooth portion being disposed at the opposite side of the first spline part from the sealing cap in the axial direction; in step h, the outer peripheral wall of the second shaft provided comprises a second smooth portion corresponding to the first smooth portion; and step h further comprises providing a second sealing washer between the first smooth portion and the second smooth portion.

In some embodiments, the motive power transmission apparatus is an electric drive assembly system comprising an electric machine and a gearbox, the first shaft is an electric machine shaft, and the second shaft is a gearbox input shaft.

### BRIEF DESCRIPTION OF THE DRAWINGS

To explain the technical solution in embodiments of the present disclosure more clearly, a brief description is given below of the drawings that need to be used in the embodiments, but it should be understood that the drawings below merely show some embodiments of the present disclosure, and thus should not be regarded as a limitation of scope; those skilled in the art could obtain other relevant drawings based on these drawings without inventive effort. In the drawings:
Fig. 1 shows a 3D exploded drawing of the motive power transmission apparatus according to an embodiment of the present disclosure.
Figs. 2a - 2c show, from different angles, schematic drawings of the sealing cap of the motive power transmission apparatus according to an embodiment of the present disclosure.
Fig. 3 shows a sectional view of the motive power transmission apparatus in an assembled state according to an embodiment of the present disclosure; and
Fig. 4 shows a sectional view of the assembly tool being used to fit the sealing cap according to an embodiment of the present disclosure.

### DETAILED DESCRIPTION

A motive power transmission apparatus and a method for assembling same according to embodiments of the present disclosure are described in detail below with reference to the drawings. To clarify the objective, technical solution and advantages of the present practical disclosure, the technical solution in embodiments of the present disclosure is described clearly and completely below with reference to the drawings in embodiments of the present disclosure; obviously, the embodiments described are some, not all, of the embodiments of the present disclosure.

Thus, the following detailed description of embodiments of the present disclosure provided in conjunction with the drawings is not intended to limit the claimed scope of the present disclosure, but merely indicates selected embodiments of the present disclosure. All other embodiments obtained by those skilled in the art based on the embodiments in the present disclosure without expending inventive effort are included in the scope of protection of the present disclosure.

Unless otherwise defined in the context, the singular form includes the plural form. Throughout the description, the terms "comprising", "having", etc. are used herein to specify the existence of the mentioned feature, number, step, operation, element, component or combination thereof, but do not rule out the existence or addition of one or more other feature, number, step, operation, element, component or combination thereof.

Furthermore, although terms including ordinal numbers such as "first" and "second" may be used to describe various components, these components are not limited by these terms, and these terms are merely used to distinguish one element from another. For example, without departing from the scope of the present disclosure, the first component may be called the second component, and similarly, the second component may be called the first component.

In the description of the present disclosure, it must be understood that directional or positional relationships indicated by the terms "upper", "lower", "left", "right", "inner" and "outer", etc. are based on the directional or positional relationships shown in the drawings, or are directional or positional relationships in which the disclosed products are usually arranged during use, or are directional or positional relationships usually understood by those skilled in the art, and are merely intended to facilitate description of the present disclosure and simplify description, without indicating or implying that the device or element referred to must have a specific orientation or be constructed and operated in a specific orientation, and thus should not be construed as limiting the present disclosure.

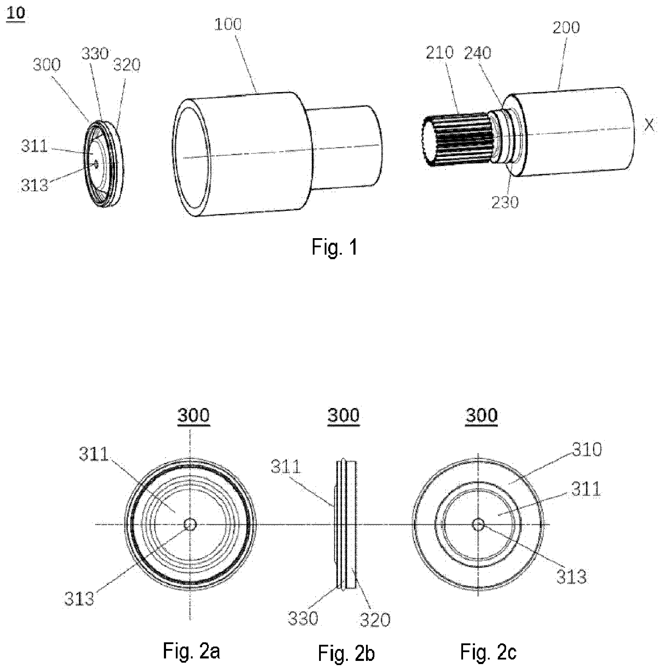

One aspect of the present disclosure proposes a motive power transmission apparatus 10; as shown in Figs. 1 - 3, the motive power transmission apparatus 10 comprises a first shaft 100 and a second shaft 200 extending along a central axis X. The first shaft 100 may be provided with a hollow cavity 130, and a first spline part 110 is provided on an inner peripheral wall of the hollow cavity 130; the first shaft 100 is for example a hollow shaft. The second shaft 200 comprises a second spline part 210 disposed on an outer peripheral wall thereof; the second spline part 210 is for example configured to complement the first spline part 110 in shape, so that the second shaft 200 and the first shaft 100 can rotate together by means of the engagement of the second spline part 210 with the first spline part 100, thereby transmitting motive power between the second shaft 200 and the first shaft 100. The second shaft 200 may for example be a solid shaft. In one specific but non-limiting and non-exclusive embodiment, the motive power transmission apparatus 10 may be an electric drive assembly system comprising an electric machine and a gearbox (not shown), wherein the first shaft may for example be an electric machine shaft, and the second shaft may for example be a gearbox input shaft. Such an electric drive assembly system is for example used in a vehicle, without limitation.

To ensure good, low-noise running of the motive power transmission apparatus 10, and ensure that the first spline part 110 and second spline part 210 will not corrode due to exposure to damp gases, lubricating grease is applied to a spline engagement part between the first spline part 110 and the second spline part 210; the lubricating grease may for example be in the form of a paste. In this case, the lubricating grease needs to be sealed, to prevent it from leaking and prevent it from being contaminated with external dirt, which would affect the lubrication result. Thus, as shown in Figs. 1 - 3, the motive power transmission apparatus 10 according to an embodiment of the present disclosure is further configured to comprise a sealing cap 300; the sealing cap 300 will be disposed in the hollow cavity 130 of the first shaft 100 to seal the lubricating grease.

Specifically, as shown in Figs. 1 - 3, the sealing cap 300 may comprise a base part 310 and a circumferential part 320 extending around the base part 310; such a sealing cap 300 is configured to be elastically deformable, so that the sealing cap 300 is fixed in a sealed manner in the hollow cavity 130 of the first shaft 100 by the circumferential part 320 pressing radially against the inner peripheral wall of the hollow cavity 130 of the first shaft 100. For example, as shown in the figures, the circumferential part 320 of the sealing cap 300 may extend from the periphery of the base part 310, substantially perpendicularly to the base part 310, and a hollow part 321 may be provided in the radial interior of the circumferential part 320. That is, such a sealing cap 300 is configured to be elastically deformable under the action of an external force, such that once the sealing cap 300 has been positioned in the hollow cavity 130 of the first shaft 100, the elastic force it produces due to elastic deformation can induce the circumferential part 320 thereof to expand and thus apply pressure radially to the inner peripheral wall of the hollow cavity 130 of the first shaft 100, and the sealing cap 300 can thereby be fixed in a sealed manner in the hollow cavity 130 of the first shaft 100. More specifically, the circumferential part 320 of such a sealing cap 300 can form an interference fit with the inner peripheral wall of the hollow cavity 130 of the first shaft 100. More specifically, such a sealing cap 300 can recover its original shape when an external force is removed. The sealing cap 300 is for example made by bending steel sheet or copper sheet.

Thus, in the motive power transmission apparatus 10 proposed according to the present disclosure, the lubricating grease applied at the spline coupling part is sealed by means of the sealing cap 300 positioned in the hollow cavity 130 of the first shaft 100; the weight of such a sealing cap 300 is negligible compared to the weight of the entire motive power transmission apparatus 10, so will not affect the motive power transmission parameters and result of the motive power transmission apparatus 10. Moreover, such a sealing cap 300 is elastically deformable, and thus can be fixed in a sealed manner by the circumferential part 320 thereof pressing radially against the inner peripheral wall of the hollow cavity 130 of the first shaft 100; thus, even when heat is being given off by the motive power transmission apparatus 10 during operation, the sealing cap 300 will not loosen in the hollow cavity 130 of the first shaft 100, so sustained and effective sealing is ensured. Furthermore, such a sealing cap 300 is structurally simple and compact in volume, saves material, is easy to process and manufacture, and has high cost-effectiveness.

According to one or more particular embodiments, as shown in Figs. 1 - 4, the base part 310 of the sealing cap 300 may be provided with a boss 311, i.e. the boss 311 protrudes relative to the remainder of the base part 310, and more specifically, the boss 311 is a hollow boss. Such a boss 311 allows the sealing cap 300 to undergo elastic deformation more easily, which can make it easier to install the sealing cap 300 in place. More specifically, the boss 311 may be configured as a conical frustum centred on the central axis X. For example, the conical frustum is tapered from the base part 310 to the top of the conical frustum. The conical boss 311 further increases the sealing cap's ability to deform elastically. Moreover, for example, in an assembled state, the boss 311 may extend away from the first spline part 110 of the first shaft 100.

According to one or more particular embodiments, as shown in Figs. 1 - 3, the sealing cap 300 may further comprise a first sealing washer 330 disposed on an outer side of the circumferential part 320 thereof. For example, a circumferential groove may be provided on the outer side of the circumferential part 320 of the sealing cap 300, with the first sealing washer 330 being located in the circumferential groove. Thus, when the sealing cap 300 is positioned in the hollow cavity 130 of the first shaft 100, the circumferential part 320 thereof presses radially against the inner peripheral wall of the hollow cavity 130 of the first shaft 100, while the first sealing washer 330 is pressed tightly between the outer side of the circumferential part 320 of the sealing cap and the inner peripheral wall of the hollow cavity 130 of the first shaft 100; this can further ensure the sealing result.

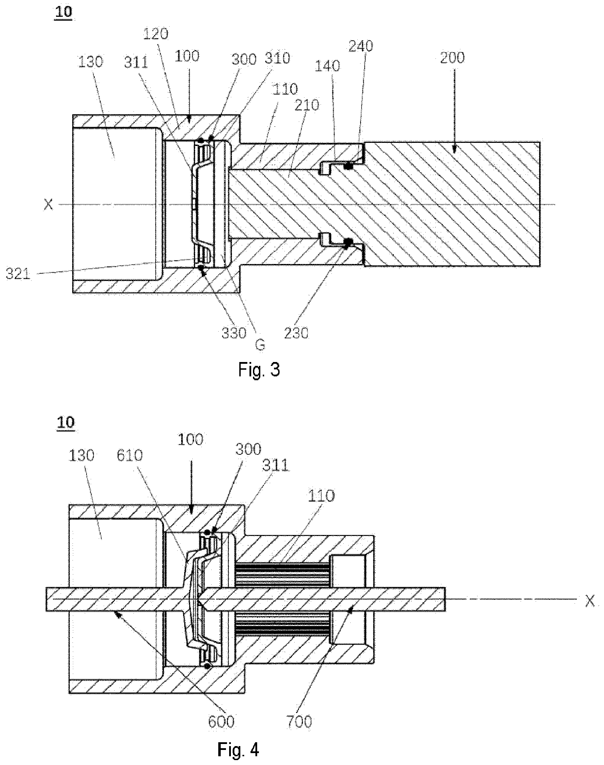

According to one or more particular embodiments, as shown in Fig. 3, the inner peripheral wall of the hollow cavity 130 of the first shaft 100 may further comprise a first smooth portion 140; in an assembled state, the first smooth portion 140 is located at the opposite side of the first spline part 110 from the sealing cap 300 in the axial direction, i.e. the first spline part 110 is located between the first smooth portion 140 and the sealing cap 300 in the axial direction. Correspondingly, the outer peripheral wall of the second shaft 200 may further comprise a second smooth portion 240 corresponding to the first smooth portion 140, and a second sealing washer 230 may be provided between the first smooth portion 140 and the second smooth portion 240. More specifically, a circumferential groove may be provided on the second smooth portion 240; the second sealing washer 230 may be located in the circumferential groove, and squeezed between the second smooth portion 240 and the first smooth portion 140, thereby ensuring effective sealing of the spline engagement part at the opposite axial end of the spline engagement part from the sealing cap 300.

According to one or more particular embodiments, as shown in Figs. 1 and 3, a step portion 120 may be provided in the hollow cavity 130 of the first shaft 100, with the sealing cap 300 being positioned at the step portion 120. To ensure the sealing result, the inner peripheral wall of the step portion 120 may undergo finishing, to reduce its roughness. Thus, the finishing required for sealing may be performed on the step portion 120 alone, reducing the overall processing costs for the first shaft 100.

According to one or more particular embodiments, as shown in Fig. 3, a gap G exists between the sealing cap 300 and the spline coupling part; this can prevent noise due to contact between components, as well as preventing wear between components. More specifically, an axial stop (not shown) for the sealing cap 300 may further be provided on the inner peripheral wall of the hollow cavity 130 of the first shaft 100, such that the axial position of the sealing cap 300 in the hollow cavity 130 of the first shaft 100 is determined by the axial stop; this makes it easier to ensure axial positioning of the sealing cap 300.

According to one or more particular embodiments, as shown in Figs. 1 - 2c, the sealing cap 300 may further be provided with a gas pressure balancing hole 313; such a gas pressure balancing hole 313 can connect the two axial sides of the sealing cap 300, making it possible to ensure gas pressure balance between the two axial sides of the sealing cap 300, to avoid a situation where the sealing cap 300 experiences axial pressure due to a gas pressure difference (for example caused by differing degrees of heating) between the two axial sides thereof, and thus ensure stable positioning of the sealing cap 300. More specifically, in an embodiment of the sealing cap 300 provided with the boss 311, the gas pressure balancing hole 313 may be provided in the boss 311. The gas pressure balancing hole 313 is dimensioned to be able to ensure gas pressure balance between the two axial sides of the sealing cap 300 while also preventing leakage of lubricating grease through the gas pressure balancing hole 313.

According to a more specific embodiment, the thermal expansion coefficient of the sealing cap 300 is the same as that of the first shaft 100, and more specifically, the first shaft 100 and second shaft 200 have the same thermal expansion coefficient. For example, the sealing cap 300 may be made of the same material as the first shaft 100 and second shaft 200. Thus, even when heated, the sealing cooperative relationship between the sealing cap 300 and the first shaft 100 will not be affected in any way.

According to another aspect of the present disclosure, a method for assembling a motive power transmission apparatus 10 is proposed, the method comprising at least the following steps:
step a: providing a first shaft 100, the first shaft 100 extending along a central axis X, and comprising a hollow cavity 130, with a first spline part 110 provided on an inner peripheral wall of the hollow cavity 130, as shown in Figs. 1 and 3:
step b: providing a sealing cap 300, the sealing cap 300 comprising a base part 310 and a circumferential part 320 extending around the base part 310, and the base part 310 being provided with a boss 311, as shown in Figs. 1 - 3;
step c: providing an assembly tool, the assembly tool comprising a clamp 600 and a tool rod 700, as shown in Fig. 4;
step d: clamping the boss 311 of the sealing cap 300 with a clamping plate 610 of the clamp 600 at a first open end of the first shaft 100, inserting the tool rod 700 in a first axial direction through a second open end of the first shaft 100 opposite the first open end, in order to use the tool rod 700 to push the boss 311 of the sealing cap 300 into the clamping plate 610 of the clamp 600, so that the sealing cap 300 deforms elastically;
step e: moving the sealing cap 300 through the first open end of the first shaft 100 in a second axial direction opposite to the first axial direction, up to an installation position in the hollow cavity 130;
step f: releasing the assembly tool, so that the sealing cap 300 is fixed in a sealed manner in the hollow cavity 130 by the circumferential part 320 of the sealing cap 300 pressing radially against the inner peripheral wall of the hollow cavity 130 of the first shaft 100;
step g: providing a second shaft 200, the second shaft 200 extending along the central axis X, and comprising a second spline part 210 provided on an outer peripheral wall of the second shaft 200;
step h: engaging the second spline part 210 of the second shaft 200 with the first spline part 110 of the first shaft 100, so that the second shaft 200 can rotate together with the first shaft 100.

It should be noted that the first open end and second open end of the first shaft 100 mentioned above may be either one of two open ends of the first shaft 100, and the first axial direction and second axial direction may change accordingly; installation of the sealing cap 300 may be achieved in both cases.

More specifically, releasing the assembly tool in step f comprises withdrawing the tool rod 700 from the sealing cap 300, such that the tool rod 700 no longer applies a preload to the sealing cap 300, and then moving the clamp 600 away from the sealing cap 300. That is, when the tool rod 700 is withdrawn, the elastic force produced by the sealing cap 300 due to elastic deformation induces the circumferential part 320 thereof to press radially against the inner peripheral wall of the hollow cavity 130 of the first shaft 100, such that the sealing cap 300 is fixed in a sealed manner in the hollow cavity 130 of the first shaft 100.

The above content mentioned in relation to the motive power transmission apparatus 10 is likewise applicable to the method proposed in the present disclosure for assembling the motive power transmission apparatus 10.

For example, in one or more particular embodiments of the method, in step b, the boss 311 of the sealing cap 300 provided is configured as a conical frustum centred on the central axis X.

In one or more particular embodiments of the method, providing the sealing cap 300 in step b further comprises providing a first sealing washer 330 on an outer side of the circumferential part 320 of the sealing cap 300. More specifically, the first sealing washer 300 is for example disposed in a circumferential groove made on the outer side of the circumferential part 320 of the sealing cap 300.

In one or more particular embodiments of the method, in step b, the sealing cap 300 provided is further provided with a gas pressure balancing hole 313.

In a more specific embodiment of the method, in step a, the first shaft 100 provided may comprise a step portion 120 disposed in the hollow cavity 130, and the installation position in step e is located at the step portion 120. That is, the sealing cap 300 will be installed at the step portion 120.

In a more specific embodiment of the method, in step a, the abovementioned axial stop (not shown) for the sealing cap 300 is provided on the inner peripheral wall of the hollow cavity 130 of the first shaft 100 provided, for axial positioning of the sealing cap 300 in the hollow cavity 130. Alternatively or additionally, as shown in Fig. 4, one may determine whether the sealing cap 300 has reached its axial installation position according to the length by which the clamp 600 and/or the tool rod 700 has been inserted into the hollow cavity 130 of the first shaft 100; for example, corresponding marks may be provided on the clamp 600 and/or the tool rod 700 to indicate the insertion length thereof.

In a more specific embodiment of the method, in step a, the inner peripheral wall of the hollow cavity 130 of the first shaft 100 provided comprises a first smooth portion 140, the first smooth portion 140 being disposed at the opposite side of the first spline part 110 from the sealing cap 300 in the axial direction; in step h, the outer peripheral wall of the second shaft 200 provided comprises a second smooth portion 240 corresponding to the first smooth portion 140; and step h further comprises providing a second sealing washer 230 between the first smooth portion 140 and the second smooth portion 240. The second sealing washer 230 is for example disposed in a circumferential groove made on the outer peripheral wall of the second shaft 200.

Demonstrative forms of implementation of the motive power transmission apparatus and method for assembling same proposed in the present disclosure have been described in detail above with reference to preferred embodiments, but those skilled in the art will understand that various alterations and changes may be made to the particular embodiments above without departing from the concept of the present disclosure, and various technical features and structures proposed in the present disclosure may be combined in various ways, without exceeding the scope of protection of the present disclosure.

The scope of the present disclosure is not defined by the embodiments described above, but by the attached claims and their equivalent scope.

## Claims

1. A motive power transmission apparatus (10), comprising:
a first shaft (100), extending along a central axis (X) and comprising a hollow cavity (130), with a first spline part (110) provided on an inner peripheral wall of the hollow cavity (130),
a second shaft (200), extending along the central axis (X) and comprising a second spline part (210) provided on an outer peripheral wall of the second shaft (200), the second spline part (210) being engaged with the first spline part (110) to enable the second shaft (200) to rotate together with the first shaft (100),
wherein the motive power transmission apparatus (10) further comprises a sealing cap (300), the sealing cap (300) comprising a base part (310) and a circumferential part (320) extending around the base part (310),
wherein the sealing cap (300) is configured to be elastically deformable, so that the sealing cap (300) is fixed in a sealed manner in the hollow cavity (130) by the circumferential part (320) pressing radially against the inner peripheral wall of the hollow cavity (130) of the first shaft (100).

2. The motive power transmission apparatus (10) as claimed in claim 1, wherein the base part (310) of the sealing cap (300) is provided with a boss (311).

3. The motive power transmission apparatus (10) as claimed in claim 2, wherein the boss (311) is a conical frustum centred on the central axis (X).

4. The motive power transmission apparatus (10) as claimed in any of claims 1 to 3, wherein the sealing cap (300) comprises a first sealing washer (330) disposed on an outer side of the circumferential part (320).

5. The motive power transmission apparatus (10) as claimed in any of claims 1 to 3, wherein a step portion (120) is provided in the hollow cavity (130) of the first shaft (100), and the sealing cap (300) is positioned at the step portion (120).

6. The motive power transmission apparatus (10) as claimed in any of claims 1 to 3, wherein the sealing cap (300) is provided with a gas pressure balancing hole (313).

7. The motive power transmission apparatus (10) as claimed in any of claims 1 to 3, wherein the thermal expansion coefficient of the sealing cap (300) is the same as the thermal expansion coefficient of the first shaft (100) and the second shaft (200).

8. The motive power transmission apparatus (10) as claimed in any of claims 1 to 3, wherein an axial stop for the sealing cap (300) is provided on the inner peripheral wall of the hollow cavity (130) of the first shaft (100).

9. The motive power transmission apparatus (10) as claimed in any of claims 1 to 3, wherein:
the inner peripheral wall of the hollow cavity (130) of the first shaft (100) comprises a first smooth portion (140), the first smooth portion (140) being located at the opposite side of the first spline part (110) from the sealing cap (300) in the axial direction,
the outer peripheral wall of the second shaft (200) comprises a second smooth portion (240) corresponding to the first smooth portion (140), and
a second sealing washer (230) is provided between the first smooth portion (140) and the second smooth portion (240).

10. The motive power transmission apparatus (10) as claimed in any of claims 1 to 3, wherein the motive power transmission apparatus (10) is an electric drive assembly system comprising an electric machine and a gearbox, the first shaft (100) is an electric machine shaft, and the second shaft (200) is a gearbox input shaft.

11. A vehicle, comprising the motive power transmission apparatus (10) as claimed in any one of claims 1 to 10.

12. A method for assembling a motive power transmission apparatus (10), wherein the method comprises:
step a: providing a first shaft (100), the first shaft (100) extending along a central axis (X), and comprising a hollow cavity (130), with a first spline part (110) provided on an inner peripheral wall of the hollow cavity (130);
step b: providing a sealing cap (300), the sealing cap (300) comprising a base part (310) and a circumferential part (320) extending around the base part (310), and the base part (310) being provided with a boss (311);
step c: providing an assembly tool, the assembly tool comprising a clamp (600) and a tool rod (700);
step d: clamping the boss (311) of the sealing cap (300) with a clamping plate (610) of the clamp (600) at a first open end of the first shaft (100), inserting the tool rod (700) into the hollow cavity (130) in a first axial direction through a second open end of the first shaft (100) opposite the first open end, in order to use the tool rod (700) to push the boss (311) of the sealing cap (300) into the clamping plate (610) of the clamp (600), so that the sealing cap (300) deforms elastically;
step e: moving the sealing cap (300) through the first open end of the first shaft (100) in a second axial direction opposite to the first axial direction, up to an installation position in the hollow cavity (130);
step f: releasing the assembly tool, so that the sealing cap (300) is fixed in a sealed manner in the hollow cavity (130) by the circumferential part (320) of the sealing cap (300) pressing radially against the inner peripheral wall of the hollow cavity (130) of the first shaft (100);
step g: providing a second shaft (200), the second shaft (200) extending along the central axis (X), and comprising a second spline part (210) provided on an outer peripheral wall of the second shaft (200);
step h: engaging the second spline part (210) of the second shaft (200) with the first spline part (110) of the first shaft (100), to enable the second shaft (200) to rotate together with the first shaft (100).

13. The method as claimed in claim 12, wherein releasing the assembly tool in step f comprises withdrawing the tool rod (700) from the sealing cap (300), and then moving the clamp (600) away from the sealing cap (300).

14. The method as claimed in claim 12 or 13, wherein in step b, the boss (311) of the sealing cap (300) provided is configured as a conical frustum centred on the central axis.

15. The method as claimed in claim 12 or 13, wherein the thermal expansion coefficient of the sealing cap (300) is the same as the thermal expansion coefficient of the first shaft (100) and the second shaft (200).
